# EUROPÄISCHE PATENTSCHRIFT

(11) **EP 3 939 774 B1**
(45) Veröffentlichungstag und Bekanntmachung des Hinweises auf die Patenterteilung: **10.08.2022**
(21) Anmeldenummer: 21178901.1
(22) Anmeldetag: 11.06.2021
(51) Int. Cl.: B29D 11/00, G01S 7/481, A61B 5/024, G01D 11/00

(54) **HERSTELLUNG EINES OPTOELEKTRONISCHEN SENSORS**
OPTOELECTRONIC SENSOR MANUFACTURE
FABRICATION D'UN CAPTEUR OPTOÉLECTRONIQUE

(30) Priorität: 17.07.2020 DE 102020118941
(43) Veröffentlichungstag der Anmeldung: 19.01.2022
(73) Patentinhaber: SICK AG, 79183 Waldkirch (DE)
(72) Erfinder: Eble, Dr. Johannes, 79183 Waldkirch (DE); Jaksic, Davorin, 79211 Denzlingen (DE)

(56) Entgegenhaltungen:
- EP-A1- 3 654 086
- EP-B1- 3 279 685
- EP-B1- 3 432 023

## Beschreibung

Die Erfindung betrifft ein Verfahren zur Herstellung eines optoelektronischen Sensors nach dem Oberbegriff von Anspruch 1 sowie einen entsprechenden optoelektronischen Sensor.

Viele optoelektronische Sensoren basieren auf dem Prinzip, dass eine Sendeeinheit einen Lichtfleck erzeugt, dessen remittiertes Licht in einer Empfangseinheit detektiert wird. Zwangsläufig wird dabei neben dem Nutzlicht der Sendeeinheit auch Fremdlicht empfangen. Die Fremdlichtmenge wiederum bestimmt entscheidend das Signal-Rausch-Verhältnis (SNR, signal-to-noise ratio). Deshalb sollte nach Möglichkeit nur das Licht aus dem Bereich des Lichtflecks detektiert werden, da andere Bereiche überhaupt nur mit Fremdlicht zum Empfangssignal beitragen.

Praktisch lässt sich das erreichen, indem im Empfangspfad für eine Fokussierung des Empfangslichtbündels gesorgt und in der Position, wo der Querschnitt am kleinsten ist, eine Blende positioniert wird. Eine derartige Blende muss aber aufwändig hergestellt, justiert und fixiert werden. Wegen Bauteiltoleranzen und begrenzter Justagequalität wird deshalb die Blendenöffnung in der Praxis oft größer gewählt, als dies insbesondere für ein möglichst gutes Signal-Rausch-Verhältnis optimal wäre. Signalverluste aufgrund von Empfangslichtanteilen, welche eine zu kleine oder gegenüber dem Empfangslichtbündel verschobene Blende nicht passieren können, würden einen überproportionalen Qualitätsverlust mit sich bringen. Fremdlicht, das die Blendenöffnung neben dem Empfangslichtbündel passiert, verschlechtert jedoch wieder das Sicht-Rausch-Verhältnis.

Ein alternativer Weg, der beispielsweise in der EP 3 279 685 B1 beschrieben wird, besteht darin, einen Matrixempfänger vorzugsehen und darin einen aktiven Teilbereich passend zum Sendelichtfleck einzulernen. Dazu wird jedoch neben einem Matrixempfänger auch noch eine aufwändige Ansteuerung benötigt. Außerdem bleibt die Ausrichtbarkeit durch Pixelgröße und Pixelraster des Matrixempfängers begrenzt.

Die DE 10 2018 128 669 A1 (EP 3654 086) offenbart ein Verfahren zum Herstellen eines optischen Systems, bei dem ein Abschirmungselement mit einem Strahlablenkungselement in einer Halterung fixiert und mit Bearbeitungslichtstrahlen bearbeitet wird, um optische Eigenschaften eines Funktionsbereichs zu verändern. Dieses Vorgehen bleibt jedoch auf den Empfangsstrahlengang beschränkt.

In der EP 3 432 023 B1 wird eine individuelle Blende eines optoelektronischen Sensors bei bereits montierter Empfangsoptik hergestellt, insbesondere mit Hilfe eines Materialbearbeitungslasers, dessen Strahlengang durch die Empfangsoptik geführt ist. Die noch unveröffentlichte deutsche Patentanmeldung mit dem Aktenzeichen 102020109596.1 nutzt für diesen Zweck speziell ein mehrschichtiges Substrat mit einer Absorptionsschicht als Ausgangspunkt der Blendenerzeugung. Wie schon in der DE 10 2018 128 669 A1 kann zwar jeweils auch ein sendeseitiger Strahlengang vorgesehen sein, aber das wird bei Erzeugung der individuellen Blende nicht unmittelbar berücksichtigt.

Es ist daher Aufgabe der Erfindung, die Robustheit eines optoelektronischen Sensors weiter zu verbessern.

Diese Aufgabe wird durch ein Verfahren zur Herstellung eines optoelektronischen Sensors nach Anspruch 1 sowie einen optoelektronischen Sensor nach Anspruch 11 gelöst. Es wird eine Anordnung eines Lichtsenders mit einer Sendeoptik und eines Lichtempfängers mit einer Empfangsoptik gebildet. Der Lichtsender erzeugt im Betrieb des optoelektronischen Sensors ein Sendestrahlenbündel begrenzten Querschnitts in einem Überwachungsbereich des Sensors, und bei Auftreffen des Sendestrahlenbündels auf ein Objekt entsteht ein Sendelichtfleck. Der Lichtempfänger andererseits empfängt Licht aus dem Überwachungsbereich und erzeugt ein Empfangssignal. Eigentlich soll das rückkehrende Sendelicht empfangen werden, das aber von Fremdlicht überlagert ist, beziehungsweise wenn das Sendelicht auf kein Objekt fällt, wird überhaupt nur Fremdlicht erfasst. Die Empfangsoptik und die Sendeoptik können separat oder gemeinsam ausgebildet sein.

Zunächst wird die relative Lage zumindest des Lichtsenders mit dessen Sendeoptik und der Empfangsoptik zueinander sowie deren Ausrichtung festgelegt. Dazu werden sie beispielsweise auf einem Träger verbaut, wie einem Gehäuseteil oder einem Optikmodul, wobei der Träger ein- oder mehrteilig sein kann. Eine hochgenaue Positionierung und Ausrichtung ist nicht ausgeschlossen, aber jedenfalls nicht nötig.

Die Empfangsoptik weist eine empfangsseitige Blende auf. Es wird jedoch anfangs nur ein Blendenrohling noch ohne die Funktion der empfangsseitigen Blende oder jedenfalls mit noch nicht passender Funktion der empfangsseitigen Blende vor dem Lichtempfänger angeordnet. Die eigentliche empfangsseitige Blende wird erst im beschriebenen, bereits verbauten Zustand zumindest von Lichtsender, Sendeoptik und Empfangsoptik erzeugt. Damit wird die übliche Bauweise umgekehrt, erst eine Blende fertig herzustellen und sie anschließend richtig justiert einzubauen. Das nachträgliche Erzeugen der empfangsseitigen Blende entspricht im Grundsatz dem Vorgehen der einleitend genannten Dokumente EP 3 432 023 B1 oder DE 10 2018 128 669 A1. Der Lichtempfänger kann wahlweise bereits vor oder erst nach Erzeugen der empfangsseitigen Blende angeordnet und fixiert werden.

Die Erfindung geht von dem Grundgedanken aus, die empfangsseitige Blende genau passend zum tatsächlichen Sendelichtfleck zu erzeugen. Dazu wird der Lichtsender eingeschaltet und zumindest eine Geometrieinformation des Sendestrahlenbündels vermessen, insbesondere des davon erzeugten Sendelichtflecks. Diese Geometrieinformation wird dann beim Erzeugen der empfangsseitigen Blende verwendet. Die Blendenerzeugung basiert somit auf einer aktiven Detektion des Sendelichtflecks oder einer sonstigen Geometrieinformation des Sendestrahlenbündels. Als Alternative zur Anpassung zwischen Sendelichtfleck und empfangsseitiger Blende weist die Sendeoptik eine sendeseitige Blende auf, die im bereits verbauten Zustand zumindest der Sendeoptik erzeugt wird. Auch die Sendeoptik verwendet in dieser Ausführungsform eine nun sendeseitige Blende, um das Sendestrahlenbündel in einer gewünschten Weise zu formen und zu begrenzen. Hier stellen sich ähnliche Herausforderungen wie auf der Empfangsseite, auch die sendeseitige Blende könnte vorab hergestellt und dann justiert eingebaut werden. Stattdessen wird sie analog der empfangsseitigen Blende im bereits verbauten Zustand der Sendeoptik aus einem relativ dazu fixierten Blendenrohling erzeugt. Das Sendestrahlenbündel ist anschließend relativ zu dem optoelektronischen Sensor ausgerichtet, etwa zu dem schon genannten Träger beziehungsweise dem Gehäuse. Die Erzeugung einer sendeseitigen Blende kann das Vermessen des Sendestrahlenbündels ersetzen oder ergänzen.

Die Erfindung hat den Vorteil, dass die empfangsseitige Blende optimal ebenso zu der tatsächlich verbauten Empfangsoptik wie auch zu dem tatsächlich verwendeten Sendepfad passt. Die Erfindung ermöglicht eine einfache, individuelle Erzeugung eines kleinen Sichtbereichs, der relativ zum Sendestrahlenbündel ausgerichtet ist. Die individuelle Herstellung der empfangsseitigen Blende ersetzt eine Justierung oder ergänzt sie zumindest in der Weise, dass bereits eine Grobausrichtung genügt, die dann durch die individuelle Herstellung verfeinert wird. Somit werden Toleranzen der optisch wirksamen Komponenten im Sende- wie im Empfangspfad minimiert werden. Da mit Toleranzen der Bauteile umgegangen werden kann, reduzieren sich Werkzeug- und Teilekosten. Die individuelle Herstellung ermöglicht eine Los-1-Produktion mit jeweils passender Position, Form und Größe. Die Vorteile zeigen sich in besonderem Maße bei optoelektronischen Sensoren mit größeren Reichweiten und hochempfindlichen Empfangselementen wie Einzelphotondetektoren (SPAD, Single-Photon Avalanche Diode).

Es wird erfindungsgemäß eine möglichst kleine Blendenöffnung erreicht, mit der im Idealfall keinerlei Fremdlicht außerhalb des Empfangslichtbündels eingesammelt und jedenfalls ein Großteil des Fremdlichts abgeblockt wird, ohne jedoch dadurch Nutzlicht zu verlieren. Das ergibt ein optimales Signal-Rausch-Verhältnis und damit eine höhere Messleistungsfähigkeit in einem justagefreien Herstellverfahren. Ebenso besteht die Möglichkeit, von dieser kleinsten Blende gezielt abzuweichen. Die individuelle empfangsseitige Blende mit kleiner Öffnung reduziert ferner Beugungserscheinungen oder Geisterlichtflecke des Lichtsenders. Das könnte sonst zu einem verfrühten Schalten bei seitlichem Einfahren von stark remittierenden Objekten führen. Auch eine Umspiegelung wird verhindert und ermöglicht den Einsatz des optoelektronischen Sensors sehr nah an glänzenden Oberflächen.

In der Empfangseinheit des Sensors wird eine Blende in einer Fokalebene der Empfangsoptik angeordnet. An dieser Blendenposition hat das Empfangslichtbündel den kleinsten Querschnitt. Je nach Ausführungsform wird die Fokalebene aufgrund von Toleranzen nicht genau getroffen, das wird immer noch als Anordnung in der Fokalebene bezeichnet. Durch die Blende kann zumindest der Fremdlichtanteil unterdrückt werden, welcher die Empfangsoptik auf dem Nahfeld oder mittleren Entfernungen erreicht. Die Blendenöffnung befindet sich innerhalb der Fokalebene dort, wo das Empfangslichtbündel die Blende passiert, so dass möglichst keine Nutzsignalanteile in der Blende verloren gehen.

Das Sendestrahlenbündel wird bevorzugt mittels einer Kamera vermessen, die auf den Lichtsender gerichtet wird. Der Sendelichtfleck wird demnach auf dem Bildsensor der Kamera erzeugt und kann so durch einfache Bildauswertung vermessen werden. Durch eine Projektionsfläche zwischen Kamera und Lichtsender, insbesondere eine Mattscheibem wird die Kamera nicht geblendet beziehungsweise übersteuert und nimmt den Sendelichtfleck mit definiertem Abstand zum Lichtsender auf einer definierten Fläche auf. Es ist auch denkbar, die Projektionsfläche in Z-Richtung zu bewegen, um mehr oder bessere Geometrieinformationen zu gewinnen. Da nur eine Kamera benötigt wird, um nacheinander eine Vielzahl von Sensoren herzustellen, spielen die Kosten sogar für eine hochwertige Kamera und Bildauswertung eine nur untergeordnete Rolle.

Die empfangsseitige Blende wird bevorzugt durch die Empfangsoptik mit einem Bearbeitungslaser erzeugt. Die Präposition "durch" ist hier räumlich, nicht etwa kausal zu verstehen. Das Laserlicht wird folglich von derjenigen individuellen Empfangsöffnung auf den Blendenrohling geführt, die auch später das Empfangslicht des optoelektronischen Sensors auf den Lichtempfänger lenkt. Es sind verschiedene Formen der Materialbearbeitung denkbar, die Erzeugen einer Öffnung in dem Blendenrohling ist nur ein Beispiel. Denkbar sind weiterhin Substrate mit einer oder mehreren Schichten, die dann lokal abgetragen werden. Ein besonders geeigneter Bearbeitungslaser ist ein Ablationslaser.

Der Bearbeitungslaser wird bevorzugt anhand der Geometrieinformation angeordnet, insbesondere anhand eines von dem Sendestrahlenbündel erzeugten Sendelichtflecks. Der Strahlengang des Bearbeitungslasers entspricht somit gerade dem Strahlengang des remittierten Sendelichts im Betrieb des optoelektronischen Sensors. Dadurch wird die Blende optimal an das Sendelicht angepasst. Es ist denkbar, gezielt von einer optimalen Passung abzuweichen, also beispielsweise den Sendelichtfleck mit der empfangsseitigen Blende nicht vollständig oder einen größeren Bereich als den Sendelichtfleck zu erfassen, dazu werden später Beispiele gegeben. Das hat dann aber nichts mit Toleranzen oder Fehlanpassungen zu tun.

Die sendeseitige Blende wird bevorzugt durch die Sendeoptik mit einem Bearbeitungslaser erzeugt. Dieser Vorgang erfolgt in Analogie zu der Erzeugung der empfangsseitigen

Blende durch einen Bearbeitungslaser, und daher sind auch entsprechende Ausgestaltungen des Blendenrohlings möglich. In einer besonders bevorzugten Ausführungsform werden sendeseitige Blende und empfangsseitige Blende von demselben Bearbeitungslaser erzeugt, insbesondere im selben Schritt.

Für die Verwendung eines Bearbeitungslasers werden Lichtsender und/oder Lichtempfänger bevorzugt geschützt. Dazu werden beispielsweise entsprechende Schutzelemente aus einer Keramik oder einem sonstigen gegen das Laserlicht unempfindlichen Material vor Lichtsender beziehungsweise Lichtempfänger angeordnet und nach der Bearbeitung entfernt. Es wurde von den Erfindern experimentell nachgewiesen, dass der Bearbeitungslaser die optischen Elemente, insbesondere auch Kunststofflinsen, nicht beeinträchtigt.

Lichtsender und Lichtempfänger werden bevorzugt koaxial angeordnet, insbesondere mit Hilfe eines Strahlteilers. Diese Bauweise wird auch als Autokollimationsanordnung bezeichnet. Alternativ ist auch eine biaxiale Anordnung vorstellbar, bei der Lichtsender und Lichtempfänger nebeneinander angeordnet sind. Die koaxiale und biaxiale Anordnung bezieht sich jeweils auf die effektiven optischen Achsen von Sende- und Empfangsstrahlengang.

Die empfangsseitige Blende wird bevorzugt mit einer angepassten Blendenform erzeugt. In vielen Ausführungsformen ist die kleinste Blendenöffnung optimal, die genau noch den vollständigen Sendelichtfleck erfasst. Sofern das Sendestrahlenbündel einen nicht kreisförmigen Querschnitt hat, kann die Blendenform das abbilden, etwa eine rechteckige Blende für einen langgezogenen Strahlquerschnitt. Die Blendenöffnung bliebe dabei immer noch möglichst klein. Es ist aber denkbar, ganz gezielt von einer perfekt auf den Sendelichtfleck abgestimmten Blendenöffnung abzuweichen. Beispiele sind kleinere oder größere Blendenöffnungen, um besonders kleine Objekte zu erfassen beziehungsweise umgekehrt doch eine gewisse Toleranz zu lassen. Ein weiteres Beispiel ist eine langgezogene oder tropfenförmige Blende, die Spielraum für das Wandern des Empfangslichtflecks aufgrund eines Triangulationseffekts lässt, was bei biaxialen Systemen als Messeffekt oder als unvermeidliches Artefakt auftritt. Die veränderte Form der Blende lässt sich durch entsprechende Strahlformung und/oder durch Bewegen eines Bearbeitungslasers erzielen. Eine größere Blendenöffnung entsteht durch laterale Bewegung. Der Triangulationseffekt lässt sich simulieren, indem der Bearbeitungslaser zwischen verschiedenen Abständen zu dem optoelektronischen Sensor verschoben wird. Dadurch kann wahlweise eine größere Blendenöffnung oder eine Mehrfachanordnung von Blendenöffnungen beispielsweise für Nah- und Fernbereich erzeugt werden.

Das Sendestrahlenbündel wird vorzugsweise in mehreren Abständen zu dem Lichtsender vermessen. Das ist sogar als Kontinuum denkbar, etwa indem die oben erwähnte Kamera mit einer langen Belichtungszeit aufnimmt, während eine Projektionsfläche zwischen Lichtsender und Kamera verschoben wird.

Die empfangsseitige Blende wird vorzugsweise in einer Fertigungslinie des Sensors hergestellt. Damit wird die Herstellung der individuellen Blende ein integraler Schritt innerhalb der üblichen Fertigung.

Der Lichtempfänger weist vorzugsweise mindestens ein Lawinenphotodiodenelement auf, das mit einer Vorspannung oberhalb einer Durchbruchspannung vorgespannt und somit in einem Geiger-Modus betrieben ist. Ein derartiger SPAD-Empfänger ist besonders empfindlich. Die Signalbandbreite wird dabei nicht limitiert. Durch die interne Verstärkung in der Photozelle ist ihr thermisches Rauschen nahezu vernachlässigbar. Damit ist ein solcher Lichtempfänger für ein Optikdesign mit einer Blende ganz besonders gut geeignet. Die große Detektionsfläche bietet Spielraum für einen lateralen Versatz des Empfangslichtbündels, an den die individuelle Blende sich nur anpasst, ohne ihn auszugleichen. Vorzugsweise ist eine Vielzahl von Lawinenphotodioden vorgesehen. Das bietet eine noch größere Detektionsfläche und ermöglicht außerdem eine statistische Auswertung.

Ein erfindungsgemäßer optoelektronischer Sensorweist einen Lichtsender, eine Sendeoptik, einen Lichtempfänger und eine Empfangsoptik mit einer Blende auf. Diese Elemente werden mittels eines Trägers in ihrer Lage und Orientierung zueinander gehalten. Das wird bei korrekter Ausrichtung und Auslegung insbesondere der empfangsseitigen Blende dadurch erreicht, dass der Sensor mit einem erfindungsgemäßen Verfahren hergestellt wird.

Der optoelektronische Sensor ist bevorzugt ein entfernungsmessender Sensor, in dem eine Lichtlaufzeitmesseinheit zum Bestimmen einer Lichtlaufzeit an den Lichtempfänger angeschlossen wird. Dafür kommen alle bekannten Lichtlaufzeitverfahren in Betracht, also Pulslaufzeitverfahren, Phasenverfahren oder auch Pulsmittelungsverfahren.

Der optoelektronische Sensor ist bevorzugt ein Lichttaster, ein Lichtgitter oder ein Laserscanner. Ein Lichttaster erfasst Objekte längs einer Achse. In einem Lichtgitter sind, jedenfalls funktional, eine Vielzahl solcher Lichttaster übereinander angeordnet. Das Lichtgitter kann entfernungsmessend sein (TOF-Lichtgitter, von TOF, Time-of-Flight, oder auch tastendes Lichtgitter). In vorteilhafter Weiterbildung zu einem Laserscanner wird die Entfernung nicht nur in einer Richtung gemessen, sondern eine bewegliche Ablenkeinheit ergänzt, wie ein Drehspiegel, oder die Empfangseinheit in einem beweglichen Messkopf montiert. Auch bei derart mitbewegten Lichttastern sind Mehrfachanordnungen denkbar, so dass der Laserscanner zu einem Mehrebenenscanner wird.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung eines optoelektronischen Sensors;
- Fig. 2: eine Blockdarstellung einer weiteren Ausführungsform eines optoelektronischen Sensors;
- Fig. 3: eine erläuternde Darstellung der Vermessung eines Sendestrahlenbündels eines optoelektronischen Sensors;
- Fig. 4: eine erläuternde Darstellung der Erzeugung einer empfangsseitigen Blende für einen optoelektronischen Sensor durch einen Bearbeitungslaser unter Verwendung von Geometrieinformationen aus der Vermessung gemäß Figur 3;
- Fig. 5: eine Darstellung des Strahlengangs in einem optoelektronischen Sensor, dessen empfangsseitige Blende gemäß Figur 4 erzeugt wurde; und
- Fig. 6: eine Darstellung einer optionalen vorgelagerten Erzeugung einer sendeseitigen Blende.

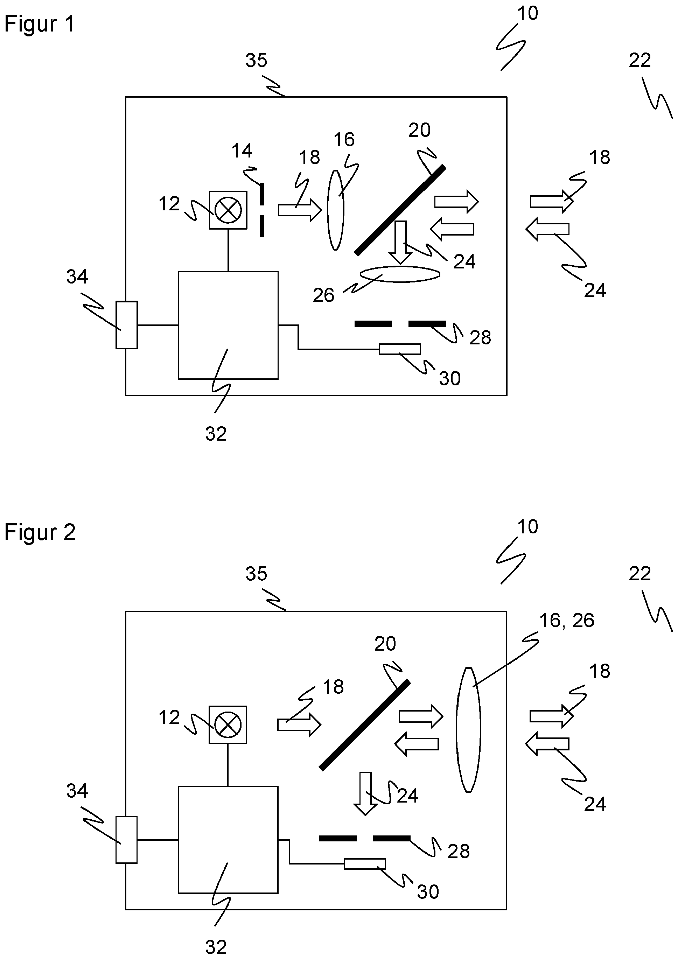

Figur 1 zeigt eine Blockdarstellung eines optoelektronischen Sensors 10, der beispielhaft als Lichttaster ausgebildet ist. Der Sensor 10 weist in einem Sendepfad einen Lichtsender 12 auf, beispielsweise eine LED oder eine Laserdiode, die als Kantenemitter oder VCSEL auch in Form eines Arrays ausgebildet ist. Damit wird mit Hilfe einer sendeseitigen Blende 14 und einer Sendeoptik 16 ein Sendestrahlenbündel 18 erzeugt und nach Transmission durch einen Teilerspiegel 20 in einen Überwachungsbereich 22 ausgesandt.

Das an Objekten in dem Überwachungsbereich 22 remittierte Licht wird als Empfangslicht 24, überlagert mit einem unvermeidlichen Fremdlichtanteil, über den Teilerspiegel 20 in einen Empfangspfad reflektiert und dort über eine Empfangsoptik 26 und eine empfangsseitige Blende 28 auf einen Lichtempfänger 30 geleitet. Der Lichtempfänger 30 kann nur ein einziges lichtempfindliches Element aufweisen, wie eine PIN-Diode, eine APD (Avalanche Photo Diode) oder eine SPAD (Single-Photon Avalanche Diode). Ebenso ist möglich, eine Vielzahl von Einzelempfangselementen in Form einer Matrix oder Zeile vorzusehen, die zusammengefasst oder ortsaufgelöst ausgelesen werden.

Eine Steuer- und Auswertungseinheit 32 ist mit dem Lichtsender 12 und dem Lichtempfänger 30 verbunden. Sie steuert das Zeitverhalten und sonstige Eigenschaften des Lichtsenders 12 und erfasst anhand des Empfangssignals des Lichtempfängers 30 Objekte in dem Überwachungsbereich 22. Dabei wird in einer Ausführungsform des Sensors 10 als entfernungsmessender Lichttaster durch Aussenden von Lichtpulsen und Bestimmen der Lichtlaufzeit bis zu deren Empfang auch der Abstand der erfassten Objekte gemessen. Über einen Ausgang 34 kann die Auswertungseinheit 32 verarbeitete oder rohe Sensormessdaten ausgeben, etwa ein Schaltsignal oder einen gemessenen Abstand, beziehungsweise umgekehrt Steuer- und Parametrieranweisungen entgegennehmen.

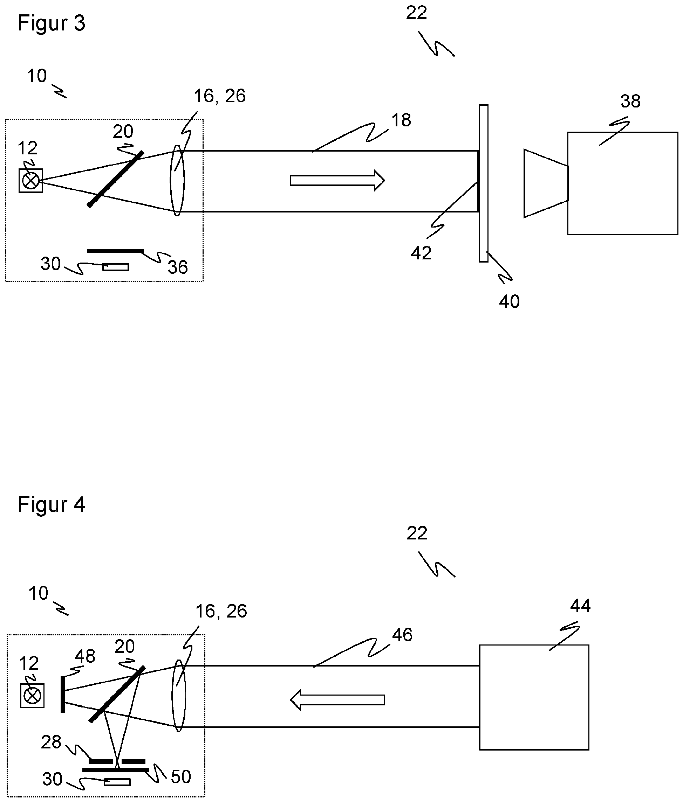

Damit der Sensor 10 seine Aufgabe erfüllen kann, müssen die verschiedenen an dem optischen Strahlengang beteiligten Elemente in ihrer Auslegung, Anordnung und Orientierung aufeinander abgestimmt sein. In Figur 1 ist ein Gehäuse 35, das die Komponenten in der ausgerichteten Lage festhält, nur als äußere Umrandung angedeutet. In praktischen Ausführungsformen sind dafür verschiedenste Gestaltungen von Trägerelementen für einzelnen oder mehrere der Elemente denkbar. Es ist aber sehr vorteilhaft, wenn die Elemente nicht nur zueinander fixiert sind, sondern auch zum Gehäuse 35, da dies der äußere Bezugspunkt für jede weitere Ausrichtung des Sensors 10 ist. Die Erfindung befasst sich nicht mit der konkreten konstruktiven Gestaltung des Sensors 10, sondern mit der Herstellung und Justierung vor allem der empfangsseitigen Blende 28 und optional auch der sendeseitigen Blende 14. Das wird später unter Bezugnahme auf die Figuren 3 bis 6 näher erläutert.

Figur 2 zeigt eine Blockdarstellung einer weiteren Ausführungsform des Sensors 10. Im Unterschied zu Figur 1 ist nun keine sendeseitige Blende 14 vorgesehen. Eine gewisse Begrenzung des Abstrahlwinkels sollte der Lichtsender 12 vorzugsweise dennoch vorsehen, es soll hiermit nur illustriert werden, dass eine optimal abgestimmte sendeseitige Blende 14 nicht zwingend erforderlich ist. Außerdem sind die Sendeoptik 16 und die Empfangsoptik 26 in einer gemeinsamen Sende-/Empfangsoptik zusammengefasst. Wie schon in Figur 1 steht die dargestellte Linse stellvertretend für eine beliebige Kombination optischer Elemente, wie sie von strahlformenden Optiken an sich bekannt sind.

Mit dem Sensor 10 nach Figur 2 wird illustriert, dass Autokollimationssysteme unterschiedlich aufgebaut sein können. Damit sollen keinesfalls weitere Variationen ausgeschlossen werden, etwa ein Sensor 10 mit sendeseitiger Blende 14 und empfangsseitiger Blende 28 wie in Figur 1, jedoch gemeinsamer Sende-/Empfangsoptik 16, 26 wie in Figur 2. Auch ein biaxialer Aufbau oder ein sogenanntes Doppelaugenprinzip ist statt des koaxialen Aufbaus eines Autokollimationssystems denkbar, bei dem Lichtsender 12 und Lichtempfänger 30 beziehungsweise Sendeoptik 16 und Empfangsoptik 26 nebeneinander angeordnet sind. Es kann eine große Familie von optoelektronischen Sensoren erfindungsgemäß hergestellt werden, zu denen neben den dargestellten Lichttastern beispielsweise Lichtgitter und Laserscanner zählen.

Die Figuren 3 bis 5 illustrieren eine Möglichkeit der Erzeugung einer für den spezifischen Sensor 10 optimierten individuellen empfangsseitigen Blende 28. Anfangs ist gemäß Figur 3 nur ein Blendenrohling 36 an der Position der späteren empfangsseitigen Blende 28 vorgesehen, vorzugsweise in der Fokalebene der Empfangsoptik 26. Der Blendenrohling 36 weist die Funktion der empfangsseitigen Blende 28 noch nicht auf und ist insbesondere zu diesem Zeitpunkt noch lichtundurchlässig. Lichtsender 12 und Sende-/Empfangsoptik 16, 26 sind bereits verbaut, also in ihrer relativen Lage und Anordnung fixiert. Erneut sei erwähnt, dass dies nicht notwendig die direkte Fixierung an einem Gehäuseabschnitt bedeutet, da beispielsweise ein ein- oder mehrteiliger Optikträger verwendet sein kann. Der Lichtempfänger 30 kann wahlweise ebenfalls schon verbaut sein wie dargestellt oder alternativ erst später hinzugefügt werden. Im letztgenannten Fall muss er natürlich während der Herstellung der empfangsseitigen Blende 28 nicht geschützt werden.

In dem in Figur 3 illustrierten Schritt soll das Sendestrahlenbündel 18 vermessen werden. Das Ziel ist, die Blende und damit das Sichtfeld des Lichtempfängers 30 optimal auf das Sendestrahlenbündel 18 abzustimmen. Es wird zunächst bevorzugt die Position und vorzugsweise auch der Querschnitt des Sendestrahlenbündels 18 gemessen. Dazu eignet sich eine Kamera 38, die auf den Lichtsender 12 gerichtet ist. Es ist vorteilhaft, das Sendestrahlenbündel 18 nicht direkt in die Kamera 38 zu leiten, sondern eine Projektionsfläche 40, etwa eine Mattscheibe, zwischen Kamera 38 und Lichtsender 12 anzuordnen. Darauf erzeugt das Sendestrahlenbündel 18 einen Sendelichtfleck 42. Durch Bildauswertung der von der Kamera 38 erzeugten Aufnahme des Sendelichtflecks 42 können Position und sonstige Geometrieeigenschaften des Sendestrahlenbündels 18 bestimmt werden.

In dem in Figur 4 illustrierten Schritt wird nun ein Bearbeitungslaser 44 so angeordnet und eingestellt, dass sein Laserlicht 46 gerade aus Richtung des soeben vermessenen Sendelichtflecks 42 über die Empfangsoptik 26 und den Teilerspiegel 20 auf den Blendenrohling 36 fällt. Das Laserlicht 46 erzeugt aus dem Blendenrohling 36 die empfangsseitige Blende 28. Aufgrund der Positionierung und Ausrichtung des Bearbeitungslasers 44 ist gewährleistet, dass die Blendenöffnung genau auf den Sendelichtfleck 42 abgestimmt ist. Das bedeutet aber nicht unbedingt, dass die Blendenöffnung exakt so groß ist, dass der Sichtbereich des Lichtempfängers 30 gerade genau den gesamten Sendelichtfleck 42 erfasst. Gezielte Abweichungen bleiben möglich. Die Größe der Blendenöffnung kann durch gezieltes Formen des Laserlichts 46 oder durch eine kleine Relativbewegung von Ort und/oder Winkel des Bearbeitungslasers 44 eingestellt werden.

Im Sendepfad wird zuvor noch ein erstes Schutzelement 48 angeordnet, um den Lichtsender 12 vor dem von dem Teilerspiegel 20 transmittierten Anteil des Laserlichts 46 zu schützen. Ebenso wird ein zweites Schutzelement 50 zwischen Blendenrohling 36 und Lichtempfänger 30 angeordnet. Letzteres kann entfallen, falls der Lichtempfänger 30 erst später montiert wird. Die Schutzelemente 48, 50 können beispielsweise Keramiken oder ein sonstiges Material sein, das von dem Laserlicht 46 nicht beschädigt wird.

Der Bearbeitungslaser ist beispielsweise ein fs- oder ps-Laser und erzeugt die Blendenöffnung durch ein Verfahren wie Laserablation. Der Blendenrohling 36 kann beispielsweise Metalle, Metalloxide, Nanostrukturen oder dergleichen aufweisen. Der Begriff Blendenöffnung bedeutet nicht, dass von dem Laserlicht 46 eine physische, durchgehende Öffnung erzeugt wird, es geht nur um die optische Wirkung. Beispielsweise ist ein mehrschichtiges Substrat mit transparenten und nicht transparenten Schichten vorstellbar, und der Bearbeitungslaser 44 trägt innerhalb der Blendenöffnung die nicht transparente Schicht oder die nicht transparenten Schichten ab.

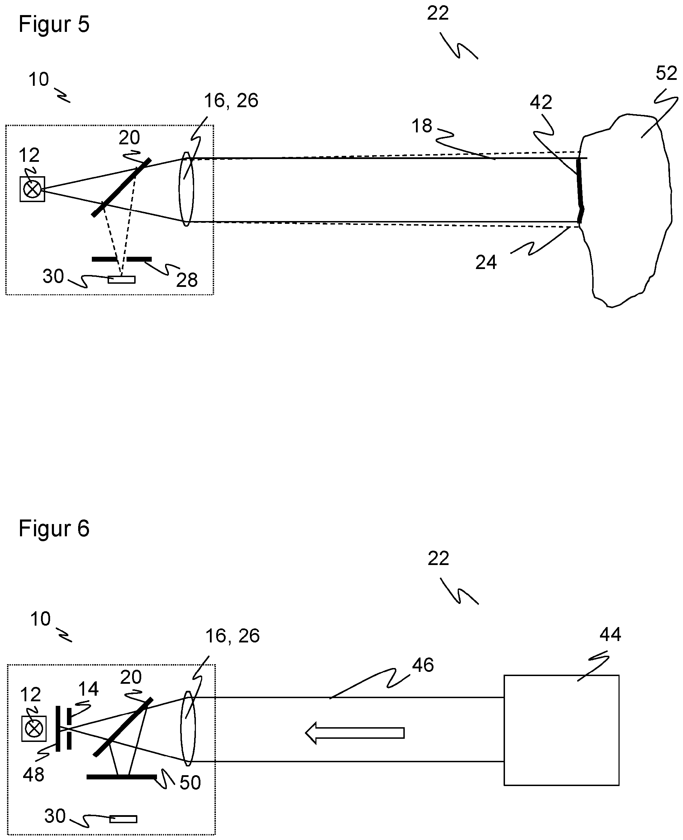

Figur 5 illustriert den Strahlengang in dem Sensor 10 nach Erzeugung der empfangsseitigen Blende 28 und Entfernen der Schutzelemente 48, 50. Die empfangsseitige Blende 28 definiert in Kombination mit der Empfangsoptik 26 den Sichtbereich, aus dem Empfangslicht 24 erfasst wird. Durch die beschriebenen Herstellungsschritte ist gewährleistet, dass dieser Sichtbereich auf den Sendelichtfleck 42 abgestimmt ist, der von dem Sendestrahlenbündel 18 auf einem Objekt 52 im Überwachungsbereich 22 erzeugt wird. Es besteht bei der Erzeugung gemäß Figur 4 noch die Möglichkeit, den Sichtbereich gezielt kleiner, genauso groß oder größer als den Sendelichtfleck 42 zu wählen. In Figur 5 ist ein leicht größerer Sichtbereich dargestellt, der noch eine kleine Toleranz lässt. Beispielsweise für die Detektion sehr kleiner Objekte 52 ist ein Sichtbereich vorteilhaft, der gezielt kleiner ist als der Sendelichtfleck 42.

Figur 6 illustriert einen optionalen vorgelagerten Schritt für die Erzeugung einer sendeseitigen Blende 14. Dazu wird analog zu dem unter Bezugnahme auf die Figur 4 erläuterten Schritt zunächst nur ein Blendenrohling statt der sendeseitigen Blende 14 montiert und ein Bearbeitungslaser 44 verwendet, um die eigentliche Blende zu erzeugen. Vorteilhafterweise geht dem noch ein weiterer Schritt voraus, in dem der Lichtsender 12 zu der Sendeoptik 16 justiert wird. Eine exakte Positionierung relativ zu dem Gehäuse 35 ermöglicht, sich mit der Ausrichtung des Bearbeitungslasers 44 am Gehäuse 35 zu orientieren.

Die sendeseitige Blende 14 weist eine kleinere Fläche auf als die aktive Fläche des Lichtsenders 12. Dadurch werden Toleranzen zwischen Lichtsender 12, sendeseitiger Blende 14, Sendeoptik 16 und Gehäuse 35 eliminiert. Das Sendestrahlenbündel 18 wird exakt zum Gehäuse 35 ausgerichtet. Dies ist beispielsweise bei einem Austausch des Sensors 10 im Feld von Vorteil, da die Eigenschaft Lichtfleckposition erhalten bleibt.

In Figur 6 wird nur die sendeseitige Blende 14 erzeugt, und solange werden Lichtsender 12 und Lichtempfänger 30 mit den Schutzelementen 48, 50 geschützt. Es schließen sich dann die erläuterten weiteren Schritte zum Vermessen des Sendestrahlenbündels 18 und zur Erzeugung der empfangsseitigen Blende 28 an.

Alternativ ist auch denkbar, in der Situation der Figur 6 bereits den Blendenrohling 36 zu montieren und beide Blenden 14, 28 gleichzeitig durch dasselbe Bündel von Laserlicht 46 zu erzeugen. Dazu wird ein Sende-Empfangsmodul oder der schon fast aufgebaute Sensor 10, jedenfalls eine feste Anordnung der Optiken und Blendenrohlinge, an der Achse des Laserlichts 46 des Bearbeitungslasers 44 ausgerichtet. Die Optiken und Blendenrohlinge sind zu diesem Zeitpunkt nicht mehr beweglich gegenüber dem Gehäuse 35. Zur Ausrichtung des Bearbeitungslasers 44 ist beispielsweise eine Ausrichtung der Rückwand des Gehäuses 35 möglich, etwa über eine Aufnahme, so dass das Laserlicht 46 dazu senkrecht auf die Optik 16, 26 und dann über den Strahlteiler 20 auf die beiden Blendenebenen der Blendenrohlinge fällt. Damit sind sowohl Sendestrahlenbündel 18 als auch als auch der Empfangssichtbereich, aus dem Empfangslicht 24 empfangen wird, relativ zu dem Gehäuse 35 ausgerichtet.

Der bisher beschriebene Sensor 10 und dessen Herstellungsverfahren können auf vielfältige Weise variiert werden. Es wurde schon erwähnt, dass anstelle eines koaxialen Systems auch ein biaxiales System oder Pupillenteilungssystem möglich ist, bei dem Sendeoptik 16 und Empfangsoptik 26 nicht auf derselben Achse liegen. Dann gibt es einen Triangulationseffekt, bei dem der Sendelichtfleck 42 je nach Abstand eines Objekts 52 lateral "wandert". Dieser Triangulationseffekt kann gewünscht und zum Messen verwendet werden, wie in einem Triangulationstaster oder einem hintergrundausblendenden Lichttaster, oder es kann lediglich ein unvermeidliches Artefakt des biaxialen Aufbaus sein. Die Form der empfangsseitigen Blende 28 kann an diesen Triangulationseffekt angepasst werden, beispielsweise mit einer länglichen oder tropfenartigen Form, um die Triangulationsbewegung in der Blendenebne auszugleichen. Auch mehrere Blenden beispielsweise für Nah- und Fernbereiche sind denkbar. Allgemein ist eine nichtrunde Form der Blendenöffnung vorstellbar, insbesondere in Anpassung an einen von der Kreisform abweichenden Querschnitt des Sendestrahlenbündels 18. Die jeweils erforderliche Blendenform kann in der zu Figur 3 beschriebenen Weise vermessen werden, auch in unterschiedlichen Abständen etwa durch Verschieben der Projektionsfläche 40.

Besitzt ein Sensor 10 mehrere Empfangskanäle, wie etwa ein Lichtgitter, und damit auch mehrere Empfangsoptiken 26, so können die Sichtbereiche auf einen Sendelichtfleck oder verschiedene Sendelichtflecke eingestellt werden, indem entsprechende empfangsseitige Blenden 28 erzeugt werden.

## Patentansprüche

1. Verfahren zur Herstellung eines optoelektronischen Sensors (10), wobei ein Lichtsender (12) mit einer Sendeoptik (16) und ein Lichtempfänger (30) mit einer Empfangsoptik (26) relativ zueinander angeordnet werden, wobei die Empfangsoptik (26) eine empfangsseitige Blende (28) aufweist, von der zunächst nur ein Blendenrohling (36) angeordnet und die empfangsseitige Blende (28) erst im bereits verbauten Zustand zumindest des Lichtsenders (12) mit dessen Sendeoptik (16) und der Empfangsoptik (26) aus dem Blendenrohling (36) erzeugt wird,
**dadurch gekennzeichnet,**
**dass** der Lichtsender (12) aktiviert und eine Geometrieinformation von dessen Sendestrahlenbündel (18) bestimmt und die empfangsseitige Blende (28) unter Verwendung der Geometrieinformation erzeugt wird
und/oder dass die Sendeoptik (16) eine sendeseitige Blende (14) aufweist, die zunächst nur als Blendenrohling montiert und dann in einem Schritt mit der empfangsseitigen Blende (28) im bereits verbauten Zustand zumindest der Sendeoptik (16) erzeugt wird.

2. Verfahren nach Anspruch 1,
wobei das Sendestrahlenbündel (18) mittels einer Kamera (38) vermessen wird, die auf den Lichtsender (12) gerichtet wird, insbesondere mit einer Projektionsfläche (40) dazwischen.

3. Verfahren nach Anspruch 1 oder 2,
wobei die empfangsseitige Blende (28) durch die Empfangsoptik (26) mit einem Bearbeitungslaser (44) erzeugt wird.

4. Verfahren nach Anspruch 3,
wobei der Bearbeitungslaser (44) anhand der Geometrieinformation angeordnet wird, insbesondere anhand eines von dem Sendestrahlenbündel (18) erzeugten Sendelichtflecks (42).

5. Verfahren nach einem der vorhergehenden Ansprüche,
wobei die sendeseitige Blende (14) durch die Sendeoptik (16) mit einem Bearbeitungslaser (44) erzeugt wird.

6. Verfahren nach einem der vorhergehenden Ansprüche,
wobei für die Verwendung eines Bearbeitungslasers (46) Lichtsender (12) und/oder Lichtempfänger (30) geschützt werden.

7. Verfahren nach einem der vorhergehenden Ansprüche,
wobei Lichtsender (12) und Lichtempfänger (30) koaxial angeordnet werden, insbesondere mit Hilfe eines Strahlteilers (20).

8. Verfahren nach einem der vorhergehenden Ansprüche,
wobei die empfangsseitige Blende (28), insbesondere durch Anpassen einer Strahlform und/oder durch Bewegen eines Bearbeitungslasers (44), mit einer angepassten Blendenform erzeugt wird, insbesondere langgezogen oder tropfenförmig.

9. Verfahren nach einem der vorhergehenden Ansprüche,
wobei das Sendestrahlenbündel (18) in mehreren Abständen zu dem Lichtsender (12) vermessen wird.

10. Verfahren nach einem der vorhergehenden Ansprüche,
wobei die empfangsseitige Blende (28) in einer Fertigungslinie des Sensors (10) hergestellt wird.

11. Optoelektronischer Sensor (10), der einen Lichtsender (12), eine Sendeoptik (16), einen Lichtempfänger (30) und eine Empfangsoptik (26) mit einer empfangsseitigen Blende (289 sowie einen Träger aufweist, der Lichtsender (12), Sendeoptik (16), Lichtempfänger (30) und Empfangsoptik (26) in relativer Anordnung zueinander fixiert,
**dadurch gekennzeichnet,**
**dass** der Sensor (10) mit einem Verfahren nach einem der vorhergehenden Ansprüche hergestellt ist.

12. Optoelektronischer Sensor (10) nach Anspruch 11,
wobei der optoelektronische Sensor (10) als ein Lichttaster, ein Lichtgitter oder ein Laserscanner ausgebildet ist.

## Claims

1. A method for manufacturing an optoelectronic sensor (10), wherein a light transmitter (12) with transmission optics (16) and a light receiver (30) with receiving optics (26) are arranged relative to one another, the receiving optics (26) comprising a receiving-side aperture (28), of which initially only an aperture blank (36) is arranged and the receiving-side aperture (28) is produced from the aperture blank (36) only in the already assembled state at least of the light transmitter (12) with its transmission optics (16) and the receiving optics (26), **characterized in that** the light transmitter (12) is activated and geometry information of its transmission beam (18) is determined and the receiving-side aperture (28) is produced using the geometry information,
and/or **in that** the transmission optics (16) has a transmission-side aperture (14) which is initially mounted only as an aperture blank and is then produced in a step with the receiving-side aperture (28) in the already assembled state at least of the transmission optics (16).

2. The method according to claim 1,
wherein the transmission beam (18) is measured by means of a camera (38) which is directed onto the light transmitter (12), in particular with a projection surface (40) therebetween.

3. The method according to claim 1 or 2,
wherein the receiving-side aperture (28) is generated by the receiving optics (26) with a processing laser (44).

4. The method according to claim 3,
wherein the processing laser (44) is arranged on the basis of the geometry information, in particular on the basis of a transmission light spot (42) generated by the transmission beam (18).

5. The method according to any of the preceding claims,
wherein the transmission-side aperture (14) is generated by the transmission optics (16) with a processing laser (44).

6. The method according to any of the preceding claims,
wherein for the use of a processing laser (46) light transmitter (12) and/or light receiver (30) are protected.

7. The method according to any of the preceding claims,
wherein light transmitter (12) and light receiver (30) are arranged coaxially, in particular by means of a beam splitter (20).

8. The method according to any of the preceding claims,
wherein the receiving-side aperture (28) is generated, in particular by adapting a beam shape and/or by moving a processing laser (44), with an adapted aperture shape, in particular elongated or drop-shaped.

9. The method according to any of the preceding claims,
wherein the transmission beam (18) is measured at a plurality of distances from the light transmitter (12).

10. The method according to any of the preceding claims,
wherein the receiving-side aperture (28) is produced in a production line of the sensor (10).

11. An optoelectronic sensor (10) comprising a light transmitter (12), transmission optics (16), a light receiver (30), and receiving optics (26) having a receiving-side aperture (28), and a carrier fixing the light transmitter (12), transmission optics (16), light receiver (30), and receiving optics (26) in relative arrangement to each other,
**characterized in that** the sensor (10) is manufactured by a method according to any of the preceding claims.

12. The optoelectronic sensor (10) according to claim 11,
wherein the optoelectronic sensor (10) is configured as a scanning-type light sensor, a light grid or a laser scanner.

## Revendications

1. Procédé de fabrication d'un capteur optoélectronique (10), dans lequel un émetteur de lumière (12) avec une optique d'émission (16) et un récepteur de lumière (30) avec une optique de réception (26) sont disposés l'un par rapport à l'autre, l'optique de réception (26) présentant un obturateur réception (28), dont seule une ébauche d'obturateur (36) est disposée initialement et l' obturateur réception (28) n'est générée à partir de l'ébauche d'obturateur (36) qu'à l'état déjà monté au moins de l'émetteur de lumière (12) avec son optique d'émission (16) et l'optique de réception (26),
**caractérisé en ce que** l'émetteur de lumière (12) est activé et une information de géométrie est déterminée de son faisceau d'émission (18) et l'obturateur réception (28) est générée à l'aide de l'information de géométrie,
et/ou **en ce que** l'optique d'émission (16) présente une obturateur émission (14) qui est d'abord montée uniquement en tant qu'ébauche d'ouverture et qui est ensuite générée dans une étape avec l'obturateur réception (28) à l'état déjà monté au moins de l'optique d'émission (16).

2. Procédé selon la revendication 1,
dans lequel le faisceau d'émission (18) est mesuré au moyen d'une caméra (38) qui est dirigée sur l'émetteur de lumière (12), en particulier avec une surface de projection (40) entre eux.

3. Procédé selon la revendication 1 ou 2,
dans lequel l'obturateur réception (28) est générée par l'optique de réception (26) avec un laser de traitement (44).

4. Procédé selon la revendication 3,
dans lequel le laser de traitement (44) est disposé sur la base de l'information géométrique, en particulier sur la base d'une tache lumineuse d'émission (42) générée par le faisceau d'émission (18).

5. Procédé selon l'une des revendications précédentes,
dans lequel l'obturateur d'émission (14) est générée par l'optique de d'émission (16) avec un laser de traitement (44).

6. Procédé selon l'une des revendications précédentes,
dans lequel, pour l'utilisation d'un laser de traitement (46), l'émetteur de lumière (12) et/ou le récepteur de lumière (30) sont protégés.

7. Procédé selon l'une des revendications précédentes,
dans lequel l'émetteur de lumière (12) et le récepteur de lumière (30) sont disposés coaxialement, en particulier au moyen d'un séparateur de faisceau (20).

8. Procédé selon l'une des revendications précédentes,
dans lequel l'obturateur réception (28) est générée, notamment par adaptation d'une forme de faisceau et/ou par déplacement d'un laser de traitement (44), avec une forme d'ouverture adaptée, notamment allongée ou en forme de goutte.

9. Procédé selon l'une des revendications précédentes,
dans lequel le faisceau d'émission (18) est mesuré à une pluralité de distances de l'émetteur de lumière (12).

10. Procédé selon l'une des revendications précédentes,
dans lequel l'obturateur réception (28) est réalisée dans une ligne de production du capteur (10).

11. Capteur optoélectronique (10) comprenant un émetteur de lumière (12), une optique d'émission (16), un récepteur de lumière (30), et une optique de réception (26) ayant un obturateur réception (28), et un support fixant l'émetteur de lumière (12), l'optique d'émission (16), le récepteur de lumière (30), et l'optique de réception (26) dans un arrangement relatif les uns par rapport aux autres, **caractérisé en ce que** le capteur (10) est fabriqué par un procédé selon l'une des revendications précédentes.

12. Capteur optoélectronique (10) selon la revendication 11,
dans lequel le capteur optoélectronique (10) est configuré comme un capteur de lumière de type à balayage, une grille de lumière ou un scanner laser.
